# EUROPEAN PATENT SPECIFICATION

(11) **EP 1 429 584 B1**
(45) Date of publication and mention of the grant of the patent: **11.07.2007**
(21) Application number: 03078816.0
(22) Date of filing: 03.12.2003
(51) Int. Cl.: H05B 33/08

(54) **Control circuit governing functioning of the led of a low-tension lighting device**
Schaltung zur Steuerung der Leuchtdioden einer Niederspannungsbeleuchtungsvorrichtung
Circuit de commande des diodes d'un dispositif d éclairage à basse tension

(30) Priority: 24.04.1997 IT MO970073
(43) Date of publication of application: 16.06.2004
(62) Divisional of application: 98201320.3
(73) Proprietor: Incerti & Simonini di Incerti Edda & C. S.n.c., 42026 Canossa (Reggio Emilia) (IT)
(72) Inventor: Incerti, Edda, 42100 Reggio Emilia RE (IT)
(74) Representative: Arena, Giovanni

(56) References cited:
- US-A- 5 442 258
- US-A- 5 575 459
- US-A- 5 598 068
- PATENT ABSTRACTS OF JAPAN vol. 0112, no. 57 (E-534), 20 August 1987 (1987-08-20) & JP 62 065486 A (SEIKO EPSON CORP), 24 March 1987 (1987-03-24)
- PATENT ABSTRACTS OF JAPAN vol. 0111, no. 74 (E-513), 4 June 1987 (1987-06-04) & JP 62 007175 A (HITACHI LTD; others: 01), 14 January 1987 (1987-01-14)

## Description

Present invention relates to a control circuit governing functioning of the LED of a low-tension lighting device.

Specifically, though not exclusively, it can be usefully emploied in cemetery-type or other monument lighting devices, where illumination has a symbolic value and should be able to continue at length but with low consumption. An example of said cemetery or monument lighting devices in which present invention can be usefully emploied is described in EP 0 876 085.

Various types of incandescent lamps are already in use for said type of application, all of which have limits and drawbacks. Firstly, they are of limited duration, in the region of a few thousand hours, and give a fairly law-level performance. Secondly, they are of poor reliability, especially due to the delicate nature of the filament.

The main aim of the present invention is to realize a control circuit of a low-tension lighting device having the following advantageous features:
- it might ensure long duration and great efficiency and reliability of the lighting device;
- it might be supplied at low tension, either in direct or alternated current, at a voltage comprised between about 5.6 V and 26 V;
- it might ensure protection for the device supply line in case of circuit failure, as well as a protection on the supply input against transitory overloads;
- it might enable a constant drive current to be supplied to the led and ensure a constant light emission of the LED even when the actual supply voltage is subject to variation;
- it might accomplish a flashing function of the LED enabling absorption of a constant current with a variation of light emission, thus preventing problems associated with electromagnetic incompatibility which can obtain in the presence of loads which are sharply variable, especially when there are considerable numbers of points to be illuminated.

These aims and advantages are all attained by the invention as it is characterised in the claims that follow.

Further characteristics and advantages of the present invention will better emerge from the detailed description that follows of a preferred but non-exclusive embodiment of the invention, illustrated purely by way of a non-limiting example in the accompanying figures of the drawings, in which:
Fig. 1: is a block diagram of the control circuit of the device;
Fig.2: is an electrical diagram of the circuit of Fig. 1.

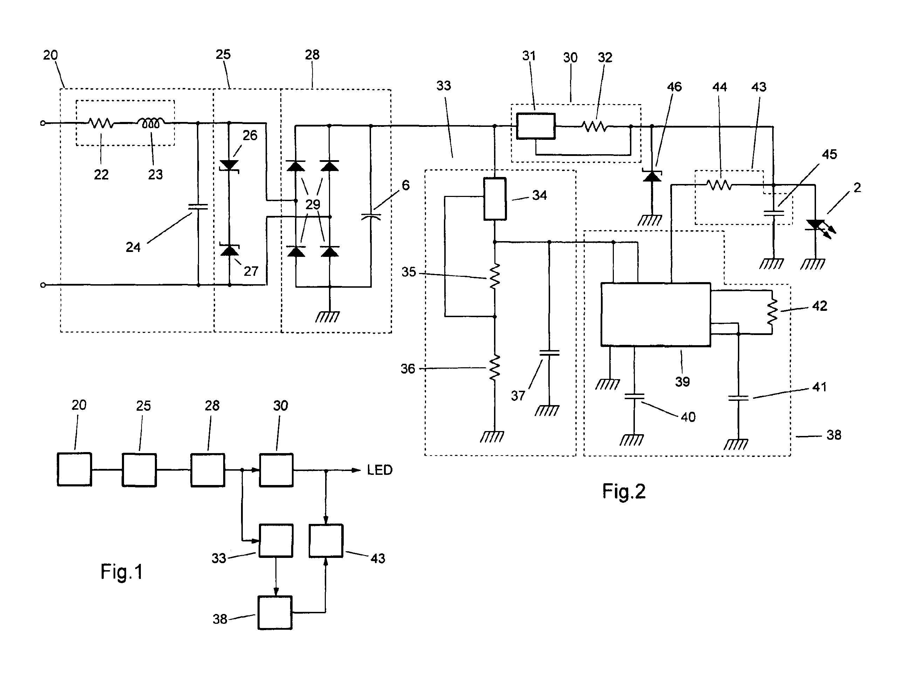

Figures 2 and 3 show, respectively, the block diagram and a electrical diagram of a preferred embodiment of a control circuit according to the invention, realized as printed circuit.

The meaning of various components of the figures is hereinafter described.

20 denotes a first circuit stage functioning as an input protection in relation to the supply terminals 21. The first circuit stage 20 corrprises an RLC filter to block radio-frequency signals. The RLC filter comprises a first resistor 22, metallic and 1/8 W resistance, which also carries out the function of connector to a supply terminal (central electrode) and also functions as a safety fuse on the supply line. The RLC filter further conprises an inductor 23 which is parasitic to the resistor 22, and a 1000 pF condenser 24.

25 denotes a second circuit stage or block, which functions as a bipolar suppressor of transients and is composed of two zener diodes 26 and 27 connected in opposition. The overload limiter action is facilitated by the resistor 22 of the first stage 20.

28 denotes a double halfwave rectifier with Graetz bridge constituted by four 150 mA/100V Schottky diodes 29 so that a small voltage drop (0.8 V) is achieved, and by an 100 µF/35 V electrolytic condenser 6. Minimalisation of the residual ripple in a.c. functioning is guaranteed by the sum of the equivalent resistances of the diodes in direct conduction and by the resistor 22 together with the electrolytic condenser (RC filter).

30 denotes a constant current ( 26.7 mA) regulator stabilizer stage for piloting the LED 2, the main task of which is to avoid electrical and thermal overloads in the LED 2 so that the latter enjoys a long working life and is thoroughly reliable. The regulation stage 30 comprises an integrated circuit 31 and a resistor 32.

The integrated circuit 31 is of the LM317L type and configured as a constant-current generator able to guarantee optimal operativity for input voltages comprised between 4.8 V and 43V . The integrated circuit 31 is provided with internal protections against electrical and thermal overload. To avoid the intervention of the thermal overload protection during normal operation, an adequate electrical connection area is allowed for on the integrated circuit realizing the control circuit to improve heat dissipation through an added heat dissipator.

33 denotes a constant-tension stabilising stage for supplying the flashing circuit. This stage 33 comprises a further integrated circuit 34, of the LM317L type, used in the constant tension (3 V) generator configuration, where the output tension is maintained at the nominal value for an input tension excursion comprised between 4.8 V and 43 V. The stabilising stage 33 further comprises two resistors 35 and 36 and a condenser 37.

38 indicates an oscillating stage for the flashing function, made by using a CMOS TIMER LMC555 integrated circuit 39 in the non-stable multivibrator configuration (rectangular wave oscillator) for which a circuit variation has been made in relation to the standard configuration, which enables a smaller number of external components to be obtained as well as the integration of the sink-driver function. This oscillating phase 38 comprises at least two condensers 40 and 41 and a resistor 42.

43 denotes an extinguishing circuit of the LED 2, known as a sink-driver, made by means of the aforementioned integrated circuit 39 through the pin called the opendrain-n.7 of the integrated circuit itself, together with a resistor 44 and a condenser 45, indicated in figure 3.

The control circuit can be supplied at low tension, and more precisely at a voltage comprised between about 5.6 V and 26 V, either in direct or alternated current.

The control circuit can operate in d.c. with automatic polarity and has a protection for the device supply line in case of circuit failure, as well as a protection on the supply input against transitory overloads (stage 25 of the circuit).

The control circuit enables a constant drive current to be supplied to the LED 2 when the actual supply voltage is subject to variation, giving reliability and good service duration times.

The LED 2 can also emit a fixed light or an intermittent light (through stage 38).

During flashing phases residual light can be used to achieve special optical effects, such as candlelight. The circuit 3 also includes a zener diode 46 for protecting the LED 2 diode during the assembly phase.

It is worth stressing that the flashing function enables absorption of a constant current with a variation of light emission. This prevents problems associated with electromagnetic incompatibility which can obtain in the presence of loads which are sharply variable, especially when there are considerable numbers of points to be illuminated.

Further, the electronic drive circuit gives rise to a universal supply system, both in d.c. and a.c. low tension, able if necessary to adapt to an unconventional supply type (photovoltaic or wind-generated).

A further advantage of a device equipped with the present control circuit is that it provides a constant light emission even in the presence of a variation in the supply voltage (within the envisaged limits of 6-24 V). This means, for example, that a same light level can be achieved at all illumination points distributed along the electrical supply line, and prevents there being variations in light levels depending on certain operative conditions in the cemetery illumination plant. With respect to incandescent lamps, the device of the invention gives a considerable energy saving (it can function at 0.2 W and 6 W), lasts longer (more than 100,000 hours of service), as well as better reliability (the time between two breakdowns is calculated at more than 50,000 functioning hours). Coupling to the lamp holder can be achieved in various ways, as the attachment itself can be made to correspond with the necessary type for the individual holder. The connection could be of the bayonet type, or the screw type, or whatever is needed.

The control circuit of the invention is particularly useful for substituting low tension filament lamps used in cemetery or monument illumination.

The control circuit can simulate a candle effect, thanks to the residual light during the flashing phase.

The lighting device realized with a control circuit according to the invention can be very compact, thanks in part to the fact that the majority of the printed circuit of the control circuit (more than two-thirds) can be housed in a hollow seating internal of the screw base of the lamp utilizing the LED as a light source.

## Claims

1. Control circuit governing functioning of the LED of a low-tension lighting device comprising four cascade connected circuit stages, wherein:
- the 1 st circuit stage (20) comprises an RLC filter blocking radio-frequency signals, whose resistor (22) also functions as a safety fuse on the supply line and whose inductor (23) is parasitic to the same resistor;
- the 2nd circuit stage (25) is a suppressor of voltage transient interferences;
- the 3rd circuit stage (28) is a double half-wave rectifier;
- the 4th circuit stage (30) is a constant current regulator of the current to be supplied to the LED, for preventing LED electrical and thermal overload.

2. Control circuit of claim 1 further comprising the following stages:
- a 5th circuit stage (33) functioning as a constant voltage stabiliser for supply to a flashing circuit;
- a 6th circuit stage (38) supplied by said 5th circuit stage functioning as an oscillator for a flashing function and
- a 7th circuit stage (43) controlled by the output of said 6th circuit stage, functioning as a circuit breaker for the LED.

3. Control circuit of claim 1 **characterized in that** the 2nd stage (25) is composed of two zener diodes (26, 27) connected in opposition.

4. Control circuit of claim 1 **characterized in that** the 3rd stage (28) comprises a Graetz bridge constituted by four Schottky diodes (29) and by a electrolytic condenser (6).

## Patentansprüche

1. Schaltung zur Steuerung der Leuchtdioden einer Niederspannungsbeleuchtungsvorrichtung, umfassend vier in Kaskade geschaltete Schaltungsstufen, wobei:
- die 1. Schaltungsstufe (20) ein RLC-Filter umfasst, das Hochfrequenzsignale blockiert und deren Widerstand (22) auch als Sicherung auf der Versorgungsleitung dient und deren Induktor (23) für denselben Widerstand parasitär ist;
- die 2. Schaltungsstufe (25) ein Löschglied für Spannungsstoßinterferenzen ist;
- die 3. Schaltungsstufe (28) ein doppelter Einweggleichrichter ist;
- die 4. Schaltungsstufe (30) ein Konstantstromregler des der LED zuzuführenden Stroms ist, um eine elektrische und thermische Überlastung der LED zu vermeiden.

2. Schaltung nach Anspruch 1, ferner umfassend folgende Stufen:
- eine 5. Schaltungsstufe (33), die als Konstantspannungshalter für die Versorgung einer Blinkschaltung dient;
- eine 6. Schaltungsstufe (38), die von der 5. Schaltungsstufe versorgt wird und als Oszillator für eine Blinkfunktion dient; und
- eine 7. Schaltungsstufe (43), die von der Ausgabe der 6. Schaltungsstufe gesteuert wird und als Ausschalter für die LED dient.

3. Schaltung nach Anspruch 1, **dadurch gekennzeichnet, dass** die 2. Stufe (25) aus zwei entgegengesetzt geschalteten Zener-Dioden (26, 27) besteht.

4. Schaltung nach Anspruch 1, **dadurch gekennzeichnet, dass** die 3. Stufe (28) eine Graetz-Brücke umfasst, die aus vier Schottky-Dioden (29) und einem Elektrolytkondensator (6) besteht.

## Revendications

1. Circuit de commande fixant le fonctionnement d'une diode électroluminescente, LED, d'un dispositif d'éclairage basse tension comprenant quatre étages de circuit connectés en cascade, dans lequel :
le premier étage de circuit (20) comprend un filtre RLC bloquant des signaux radio fréquence, dont la résistance (22) agit également comme fusible de sécurité sur la ligne d'alimentation et dont l'inductance (23) est parasite à la résistance ;
le deuxième étage de circuit (25) est un suppresseur d'interférences transitoires de tension ;
le troisième étage de circuit (28) est un redresseur double alternance ; et
le quatrième étage de circuit (30) est un régulateur à courant constant du courant à fournir à la LED pour empêcher une surcharge électrique et thermique de la LED.

2. Circuit de commande selon la revendication 1, comprenant en outre les étages suivants:
un cinquième étage de circuit (33) agissant en tant que stabilisateur de tension constante pour fourniture à un circuit de clignotement ;
un sixième étage de circuit (38) alimenté par le cinquième étage de circuit agissant comme oscillateur pour une fonction de clignotement ; et
un septième étage de circuit (43) commandé par la sortie du sixième étage de circuit agissant en tant que rupteur de circuit pour la LED.

3. Circuit de commande selon la revendication 1, **caractérisé en ce que** le deuxième étage (25) est constitué de deux diodes zener (26, 27) connectées en opposition.

4. Circuit de commande selon la revendication 1, **caractérisé en ce que** le troisième étage (28) comprend un pont de Graetz constitué de quatre diodes Schottky (29) et d'un condensateur électrolytique (6).
